(19) Europäisches Patentamt
European Patent Office
Office européen des brevets

(11) Publication number: **0 309 718 B1**

## (12) EUROPEAN PATENT SPECIFICATION

(45) Date of publication of patent specification: **23.10.91**   (51) Int. Cl.⁵: **A01F 15/14**

(21) Application number: **88113395.3**

(22) Date of filing: **18.08.88**

(54) **Twine arm device for a machine for forming cylindrical bales of crop.**

(30) Priority: **30.09.87 GB 8722907**

(43) Date of publication of application:
**05.04.89 Bulletin 89/14**

(45) Publication of the grant of the patent:
**23.10.91 Bulletin 91/43**

(84) Designated Contracting States:
**DE ES FR GB IT NL**

(56) References cited:
**EP-A- 0 160 295**
**EP-A- 0 192 904**
**DE-A- 2 620 807**
**US-A- 2 971 455**

(73) Proprietor: **DEERE & COMPANY**
**1 John Deere Road**
**Moline, Illinois 61265(US)**

(72) Inventor: **Viaud, Jean**
**16, Rue de l'Ecole**
**F-57200 Sarreguemines(FR)**
Inventor: **Roth, Arsène**
**Walschbronn**
**F-57720 Volmunster(FR)**

(74) Representative: **Feldmann, Bernhard**
**DEERE & COMPANY European Office Patent**
**Department Steubenstrasse 36-42 Postfach**
**100862**
**W-6800 Mannheim 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a twine arm device, for a machine for forming cylindrical bales of crop with a baling chamber having a mouth for the crop, comprising a twine arm which is pivotally mountable on the machine for sweeping movement of the arm across the chamber mouth and comprises a long arm portion with initial upstream and final downstream parts and a short arm portion which is connected to the long arm portion at the end of the initial part, the portions being adapted to carry a pair of strands of twine for the bale through the final part of the long arm portion and the short arm portion.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale.

There are basically two forms of such machines, namely those with a fixed volume baling chamber defined by driven fixed-position rolls and those with a baling chamber defined by runs of driven belts which move outwardly to enlarge the chamber to accommodate the bale as it grows in size. In both forms the hay is caused by the driven movement of the rolls or belts to roll round upon itself into a core and the core rotates about its horizontal axis and finally a completed bale is formed, the chamber being fed throughout with hay. The completed bale is tied with twine to maintain its shape and is discharged by rolling through a gate formed by a rear portion of the machine.

The twine is presented to the baling chamber mouth, which extends across the machine, by way of a twine arm through which the twine passes. The arm is mounted on a vertical pivot pin located on a cross beam of the machine and the arm turns in a horizontal plane about its pivot sweeping the free end of the twine across the mouth where it is caught between the completed bale and the moving belts causing the twine to be wrapped round the bale. Due to the progress of the arm across the mouth the twine is bound round the bale in a spiral path over its length.

In order to ensure quick and sufficient wrapping of the bale, two twine arms with a separate strand of twine and each serving a half length of bale are sometimes used.

US-A-2 971 455 discloses a twine arm device with twin twine arms mounted together and swinging about a common pivot as defined in the opening paragraph above.

The present invention provides an arrangement whereby two strands of twine can also be fed to the bale simultaneously, but without the necessity or the expense and complication of separate twine arms and separate guide means for the strands of twine. As used herein "twine" is intended to include other appropriate binding materials.

According to the present invention the short arm portion is branched from the long arm portion at the end of the initial part, the portions being adapted so that the pair of strands of twine can be carried through the initial part and then separately through the final part and short arm portion respectively.

In this way a bale can be wrapped with two strands of twine without using two separate arms. Hence the arrangement is simple and inexpensive. It is easier to feed two strands of twine into the initial common part than to feed them into separate passages in two arms.

The inventive concept includes a machine, for forming cylindrical bales of crop, having a twine arm device of the present invention.

An embodiment of a machine according to the present invention will now be described with reference to the accompanying drawings in which:

Fig. 1    is a view from the left of the side of a round baler for forming large cylindrical bales of hay showing in broken lines some details within the machine, which has a bifurcated twine arm;

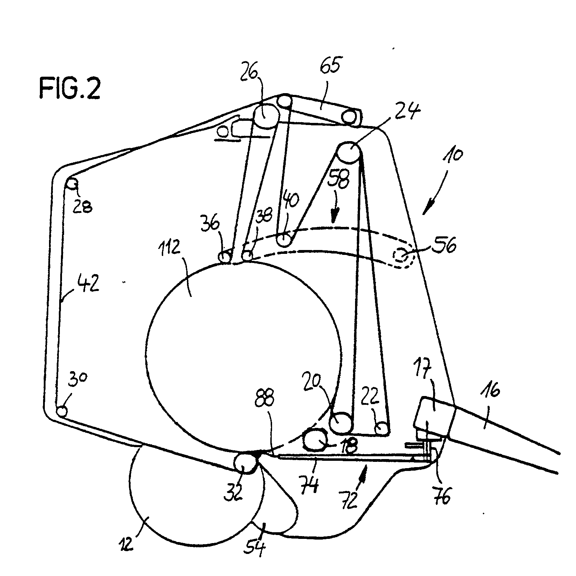

Fig. 2    is a similar view to that of Fig. 1, with some details omitted, but with the machine at a stage in which a bale is being wrapped with twine;

Fig. 3    is a perspective view of the twine arm of Fig. 1 and 2;

Fig. 4    is a view of the twine arm from the underside of the machine looking upwards; and

Fig. 5    is a view of the twine arm taken along the line V-V in Fig. 4, i. e. looking from the front of the machine.

In the drawings, the baler includes a main frame 10 mounted on a pair of wheels 12. The main frame has an upright fore-and-aft extending wall 14 on either side connected by transverse beams (not shown). A draft tongue 16 is connected to a transverse beam 17 at the front of the frame 10 and extends forwardly for attaching the baler to a tractor (also not shown) which draws the machine.

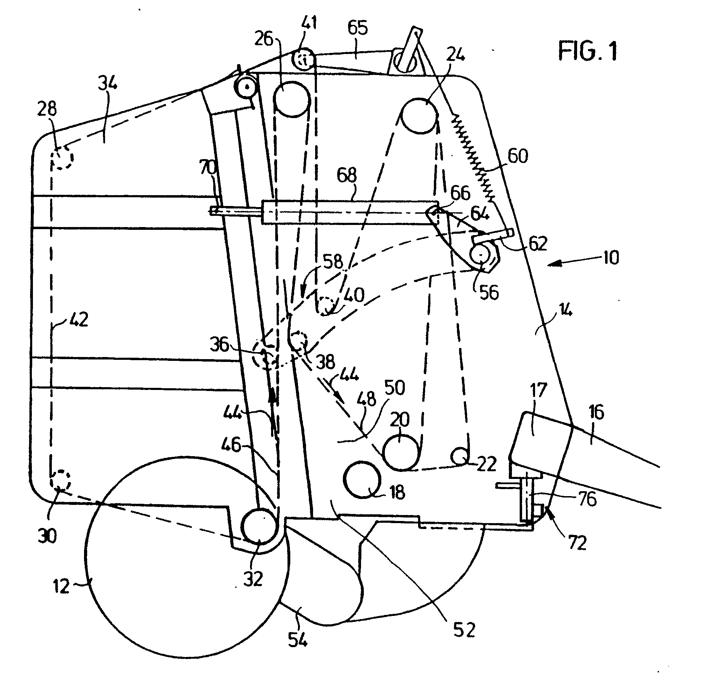

A plurality of lateral rolls extends over the width of the machine (Fig. 1). One set of rolls 18, 20, 22, 24, 26 is journalled in the side walls 14, whilst another set consisting of rolls 28, 30, 32 is journalled in a gate 34 which is swingable about a pivot axis at the top of the baler. There is also a pair of chamber restricting rolls 36, 38 and two belt take-up rolls 40, 41.

Six rubber belts 42 are trained side-by-side over the rolls, with the exception of the roll 18 which acts as a stripper roll, to provide the configuration shown and they move in the direction indicated by arrows 44, the stripper roll 18 being driven anti-clockwise as viewed in Fig. 1. However, alternate belts only are trained over the lower foremost roll 22, whilst the remaining belts by-pass this roll, to provide a staggered array which is of no significance in relation to the present invention but which is described in our co-pending European patent application 82106409. Upwardly extending runs 46, 48 of the belts 42 define a bale-forming chamber 50 the ends of which are provided by the side walls 14 and gate 34 and which has an inlet or mouth 52 for crop received from a pick-up 54 beneath it.

In order to accommodate the increasing diameter of a growing bale core in the bale-forming chamber 50, the size of the chamber must also increase and a belt take-up and tensioning mechanism is provided at either side of the machine. These mechanisms include a pair of rearwardly extending idler arms which are mounted rigidly at the forward end of the main frame 10 on a horizontal transverse shaft 56, providing a pivot connection for the arms, and of which the right hand arm 58 only is shown; the belt take-up roll 40 which is supported at either end at an intermediate location on the arms 58; and the pair of chamber restricting rolls 36, 38 supported at the free ends of the arms. The arms are biased in an anti-clockwise direction (in Fig. 1) by a pair of springs, one on either side of the main frame 10, of which only the right hand spring 60 is shown and only its arrangement will be described, the other being similar. The spring 60 is connected at its lower end by a post 62 to a lever portion 64 of the arm 58, the portion 64 being rigid with the pivot shaft 56, and at its upper end to one arm of a bell crank 65 the other arm of which bears one end of the take-up roll 41. The free end of the lever portion 64 is pivotally connected at a point 66 to the cylinder of a piston and cylinder unit 68, loading the arm 58, of which the piston is in turn pivotally connected to the gate 34 at a point 70, a similar arrangement being provided also on the left hand side of the machine.

As described thus far the baler is conventional.

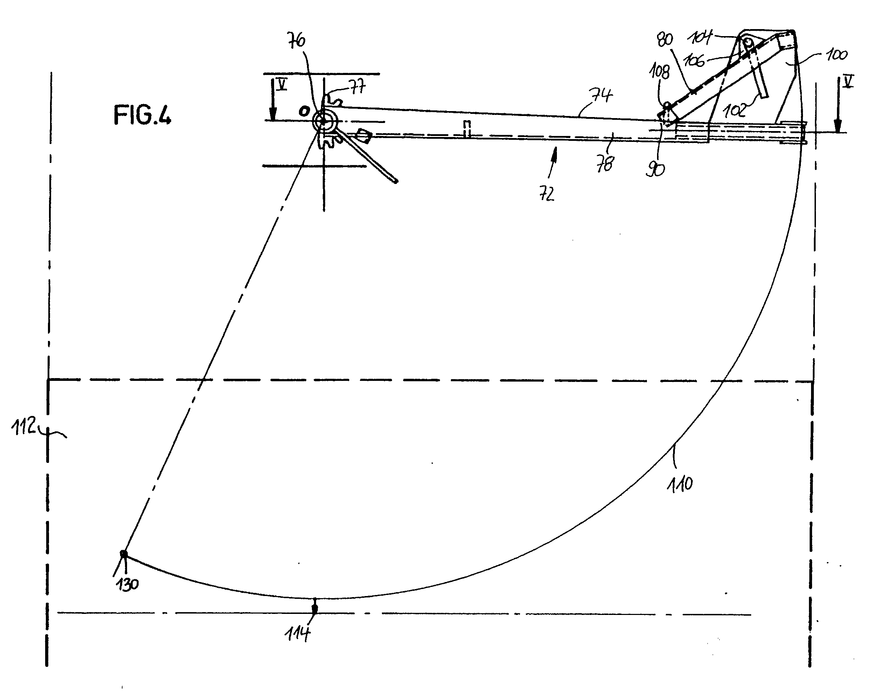

A twine arm device 72 is pivotally mounted on the underside of the transverse beam 17 at a location somewhat nearer the right hand side of the machine than the left as clearly shown in Fig. 4. In particular twine arm 74 is mounted for oscillation about an upright pivot shaft 76 supported by the beam 17, the arm 74 being moved by a twine arm cylinder (not shown) coupled, through gearing 77 on the shaft 76, to the arm 74 as described in our European patent application 87109678.

The arm 74 itself is bifurcated and consists of a long arm portion 78 and a short arm portion 80. Both portions 78, 80 are tubes which are rectangular in cross section (but with one of their sides open, this side facing forwardly in Fig. 4) over most of their length but terminate as twine dispensing tubes which are circular in cross section. The long arm portion 78 is reduced in rectangular cross section from its mounted (inner) end toward its free end and is straight, whilst the rectangular cross section of the short arm portion 80 has a constant cross section and extends initially away from the long arm portion 78 toward the front of the machine but its free (outer) end is angled through about 30° so that it then becomes approximately parallel to the long arm portion 78.

Inlet apertures 82, 84 for twine are provided in the long arm portion 78 at its inner end to receive separate strands 86, 88 of twine from storage reels thereof (not shown) located respectively on the side of the machine as is conventional and on the front of the machine, but the location is of course not critical. One strand 88 extends through the length of the long arm portion 78, i.e. through intial upstream and final downstream parts, to emerge at the free end thereof, whilst the other strand 86 extends through the upstream part and passes into the short arm portion 80 at point 90 at the end of the initial part and emerges at the free end of the short arm portion 80. Plates 91 are welded diametrically opposite to one another on the free end of the long arm portion 78 and, as shown in Fig. 5, have a V-shaped recess to guide the twine strands 86, 88.

Both strands 86, 88 pass through a strand-braking device 92 in their path in the long arm portion 78. In this device two posts 94, 96 guide the strands 86, 88 between a plate 98 and a wall of the portion 78. Since the plate 98 is spring loaded toward the wall the strands 86, 88 are sandwiched therebetween and the effect is to brake the movement of the strands so they are maintained in tension on the downstream side of the brake device 92.

Turning now to the important mounting of the short arm portion 80, a plate 100 extending forwardly (when in the position in Fig. 4) is welded to the end of the long arm portion 78 and has a slot 102 therethrough receiving a bolt 104. The portion 80 has lug 106 which is apertured also for receiving the bolt 104. The portion 80 is bolted to the plate 100 at one end and received in a hoop 108 on the long arm portion 78 at the other end. The slot 102, although straight, approximates to an arc of a circle 110 with its centre at the axis of the pivot shaft 76. The significance of this is that when the twine arm 74 is oscillated about the pivot shaft 76 the strand 86 emerging from the short arm portion 80 will follow the same circle 110 as that followed by the strand 88 from the long arm portion 78 no matter what position the bolt 104 is in the slot 102. Adjustment movement of the short arm portion 80 along the slot 102 is readily accommodated by the hoop 108.

The location of the pivot shaft 76 and thus the arc of the circle 110 traced by the free ends of the portions 78, 80 are such that the arm 74 will practically touch a completed bale 112 at a point 114 aligned in the fore-and-aft direction with the shaft 76 which enables, as will be described below, the twine to be caught between the bale 112 and belts 42 to be drawn round the bale.

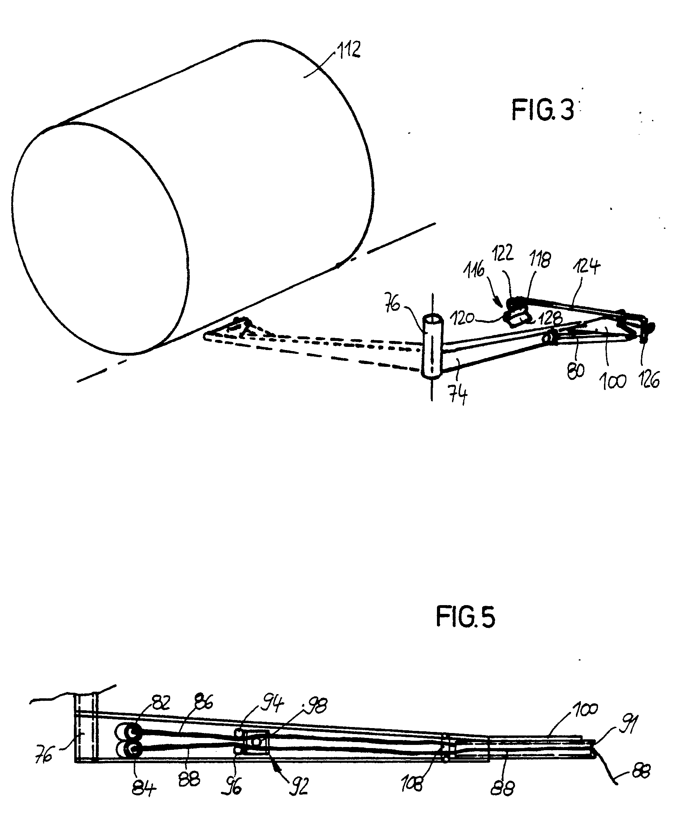

As can be seen in Fig. 3 a conventional twine-cutting apparatus 116 is located at the left hand side of the machine. It has a tube 118 pivotally mounted on a shaft 120 extending through it and fixed to the main structure of the machine. A ring 122 is rigid with the tube 118 and receives within it an offset rear end of a rod 124 of which the forward end 126 which is also offset is, in the "home" position of the arm 74 indicated by full lines in Fig. 3, in contact with the forward end of the plate 100. A knife 128 is rigid with the tube 118 and is spring loaded upwardly, i. e. turning in the anti-clockwise direction as viewed in Fig. 3.

Operation is as follows. With the twine arm 74 in the "home position", when the bale 112 reaches the desired diameter extension of the twine arm cylinder (not shown) is automatically initiated to move the gearing 77 to cause the arm to sweep anti-clockwise from the full line position in Fig. 3. At the point 114 in Fig. 4 the strands 86, 88 which hang down from the outer ends of the long and short arm portions 78, 80 are entrained with the crop entering the chamber 50 and are thus pulled between the bale 112 and the belts 42. The arm quickly reaches the end of its anti-clockwise travel (as in Fig. 3) as indicated by point 130 in Fig. 4, this sweep taking only 3 to 4 seconds. Wrapping of twine really substantially starts at the point 130 where the arm 74 pauses for two turns of the bale 112 which gives rise to four wraps since there are two strands 86, 88.

The twine arm cylinder retracts for the much slower return sweep of the arm 74 which takes about 20 seconds, both strands 86, 88 lying in the V-shaped recess provided by the plates 91 at the free end of portion 78. The strands 86, 88 wrap round the bale 112 in a spiral, the spacing between the successive spirals depending on the adjustment chosen for the short arm portion 80 along the slot 102. A scale indicative of this can be provided along the slot 102 if desired. At the end of the return sweep the twine is wrapped over itself for two turns of the bale 112 (as at the other end of the bale). Finally the arm 74 passes below the knife 128 and then the plate 100 engages the forward end 126 of the rod 124 causing the knife 128 to move against its spring loading and to cut the twine strands 86, 88 being dragged across it.

The completed bale 112 is released through the gate 34. The wrapping cycle is repeated when a fresh bale has reached the required size.

## Claims

1. A twine arm device, for a machine for forming cylindrical bales of crop with a baling chamber (50) having a mouth (52) for the crop, comprising a twine arm (74) which is pivotally mountable on the machine for sweeping movement of the arm (74) across the chamber mouth (52) and comprises a long arm portion (78) with initial upstream and final downstream parts and a short arm portion (80) which is connected to the long arm portion (78) at the end of the initial part, the portions (78, 80) being adapted to carry a pair of strands (86, 88) of twine for the bale (112) through the final part of the long arm portion (78) and the short arm portion (80), characterised in that the short arm portion (80) is branched from the long arm portion (78) at the end of the initial part, the portions (78, 80) being adapted so that the pair of strands (86, 88) of twine can be carried through the initial part and then separately through the final part and short arm portion (80) respectively.

2. A twine arm device according to claim 1 characterised in that a twine-braking device (92) is disposed in the initial upstream part of the long arm portion (78) comprising guide posts (94, 96) and a plate (98) spring loaded toward a wall of the long arm portion (78), the posts (94, 96) being arranged to guide the strands (86, 88) between the plate (98) and wall and the plate (98) being arranged to sandwich the strands (86, 88) between itself and the wall.

3. A twine arm device according to claim 1 or 2 characterised in that the short arm portion (80) is adjustable in relation to the long arm portion (78) so as to vary the spacing between the free ends of the portions (78, 80).

4. A twine arm device according to claim 3 characterised in that the short arm portion (80) is arranged so that on adjustment its free end traces substantially the same arc as the free end of the long arm portion (78) on said sweeping movement.

5. A twine arm device according to claim 4 characterised in that a plate (100) is rigid with the long arm portion (78), and the short arm portion (80) is mounted on, and movable on, the plate (100) for the said adjustment.

6. A twine arm device according to claim 5 characterised in that the plate (100) has a slot (102) therein which approximates to a geometric arc drawn about the pivot of the twine arm (74) as centre, and the short arm portion (80) is adjustable along the slot (102).

7. A machine for forming cylindrical bales of crop with a baling chamber (50) having a mouth (52) for the crop, comprising a twine arm device (72) with a twine arm (74) which is pivotally mountable on the machine for sweeping movement of the arm (74) across the chamber mouth (52) and comprises a long arm portion (78) with initial upstream and final downstream parts and a short arm portion (80) which is connected to the long arm portion (78) at the end of the initial part, the portions (78, 80) being adapted to carry a pair of strands (86, 88) of twine for the bale (112) through the final part of the long arm portion (78) and the short arm portion (80), characterised in that the short arm portion (80) is branched from the long arm portion (78) at the end of the initial part, the portions (78, 80) being adapted so that the pair of strands (86, 88) of twine can be carried through the initial part and then separately through the final part and short arm portion (80) respectively.

8. A machine according to claim 7 and to claims 5 or 6 having a knife (128) for cutting the twine characterised in that the knife is arranged to be movable to its cutting position by the said plate (100).

## Revendications

1. Dispositif à bras guide-ficelle pour une machine servant à former des balles cylindriques de récolte et comportant une chambre (50) de formation de la balle possédant une embouchure (52) d'entrée de la récolte, et comprenant un bras guide-ficelle (74), qui peut être monté de manière à pouvoir pivoter sur la machine afin de déplacer le bras (74) selon un mouvement de balayage en travers de l'embouchure (52) de la chambre et comprend un élément long (78) possédant une partie amont initiale et une partie aval finale, et un élément court (80) qui est raccordé à l'élément long (78) du bras, à l'extrémité de la partie initiale, les éléments (78,80) étant adaptés pour porter un couple de brins (86,88) d'une ficelle pour la balle (112) au moyen de la partie finale de l'élément long (78) du bras et de l'élément court (80) du bras, caractérisé en ce que l'élément court (80) du bras s'étend à partir de l'élément long (78) du bras, à l'extrémité de la partie initiale, les éléments (78,80) étant adaptés de telle sorte que le couple de brins (86,88) de la ficelle peut être porté par la partie initiale, puis respectivement séparément par la partie finale et l'élément court (80) du bras.

2. Dispositif à bras guide-ficelle selon la revendication 1, caractérisé en ce qu'un dispositif (92) de freinage de la ficelle est disposé dans la partie initiale amont de l'élément long (78) du bras et comporte des tiges de guidage (94,96) et une plaque (98) chargée par un ressort en direction d'une paroi de l'élément long (78) du bras, les tiges (94,96) étant agencée de manière à guider les brins (86,88) entre la plaque (98) et la paroi, la plaque (98) étant disposée de telle sorte qu'elle-même et la paroi enserrent les brins (86,88).

3. Dispositif à bras guide-ficelle selon la revendication 1 ou 2, caractérisé en ce que l'élément court (80) du bras peut être réglé par rapport à l'élément long (78) du bras de manière à modifier l'espace entre les extrémités libres des éléments (78,80).

4. Dispositif à bras guide-ficelle selon la revendication 3, caractérisé en ce que l'élément court (80) du bras est agencé de manière que lors de l'ajustement, son extrémité libre se déplace sensiblement sur le même arc que l'extrémité libre de l'élément long (78) du bras lors dudit mouvement de balayage.

5. Dispositif à bras guide-ficelle selon la revendication 4, caractérisé en ce qu'une plaque (100) est fixée rigidement à l'élément long (78) du bras et que l'élément court (80) du bras est monté et est déplacable sur la plaque (100) pour réaliser ledit ajustement.

6. Dispositif à bras guide-ficelle selon la revendication 5, caractérisé en ce que la plaque (100) possède une fente (102) qui possède approximativement la forme d'un arc géométrique tracé autour du pivot du bras guideficelle (74) comme centre, et que l'élément court (80) du bras est réglable le long de la fente (102).

7. Machine pour former des balles cylindriques de récolte et comportant une chambre (50) de formation de la balle possédant une embouchure (52) d'entrée de la récolte, et comprenant un dispositif à bras guide-ficelle (72), possédant un bras guide-ficelle (74), qui peut être monté de manière à pouvoir pivoter sur la machine afin de déplacer le bras (74) selon un mouvement de balayage en travers de l'embouchure (52) de la chambre et comprend un élément long (78) possédant une partie amont initiale et une partie aval finale, et un élément court (80) qui est raccordé à l'élément long (78) du bras, à l'extrémité de la partie initiale, les éléments (78,80) étant adaptés pour porter un couple de brins (86,88) d'une ficelle pour la balle (112) au moyen de la partie finale de l'élément long (78) du bras et de l'élément court (80) du bras, caractérisé en ce que l'élément court (80) du bras s'étend à partir de l'élément long (78) du bras, à l'extrémité de la partie initiale, les éléments (78,80) étant adaptés de telle sorte que le couple de brins (86,88) de la ficelle peut être porté par la partie initiale, puis respectivement séparément par la partie finale et l'élément court (80) du bras.

8. Machine selon la revendication 7 et les revendications 5 ou 6, comportant un couteau (128) pour sectionner la ficelle, caractérisée en ce que le couteau est dis posé de manière à pouvoir être amené dans sa position de coupe par ladite plaque (100).

**Patentansprüche**

1. Garnarmvorrichtung für eine Maschine zum Bilden zylindrischer Ballen aus Erntegut mit einer Ballenformkammer (50) mit einem Mund (52) für das Erntegut, welche einen Garnleitarm (74) aufweist, der schwenkbar an der Maschine zur Ausführung einer Streichbewegung des Armes (74) quer über den Kammermund (52) angeordnet ist und einen langen Armteil (78) mit anfänglich stromaufwärts und abschließend stromabwärts liegenden Teilen und einem kurzen Armteil (80) aufweist, der mit dem langen Armteil (78) an dem Ende des anfänglichen Teils verbunden ist, wobei die Armteile (78, 80) so ausgebildet sind, daß sie zwei Stränge (86, 88) Garn für den Ballen (112) durch den abschließenden Teil des langen Armteils (78) und den kurzen Armteil (80) tragen, dadurch gekennzeichnet, daß der kurze Armteil (80) von dem langen Armteil (78) an dem Ende des anfänglichen Teils abzweigt, wobei die Armteile (78, 80) so ausgebildet sind, daß das Strangpaar (86, 88) des Garnes durch den anfänglichen Teil und dann getrennt durch den abschließenden Teil und den kurzen Armteil (80) getragen werden kann.

2. Garnarmvorrichtung nach Anspruch 1, dadurch gekennzeichnet, daß eine Garnbremsvorrichtung (92) in dem anfänglichen stromaufwärts liegenden Teil des langen Armteils (78) angeordnet ist, die Führungspfosten (94, 96) und eine Platte (98) aufweist, welche in Richtung auf eine Wand des längeren Armteils (78) federbelastet ist, wobei die Pfosten (94, 96) so angeordnet sind, daß sie die Stränge (86, 88) zwischen der Platte (98) und der Wand führen und die Platte (98) so angeordnet ist, daß sie die Stränge (86, 88) zwischen ihr und der Wand einschließen.

3. Garnarmvorrichtung nach Anspruch 1 oder 2, dadurch gekennzeichnet, daß der kurze Armteil (80) mit Bezug auf den langen Armteil (78) einstellbar ist, um so den Abstand zwischen den freien Enden der Armteile (78 und 80) zu variieren.

4. Garnarmvorrichtung nach Anspruch 3, dadurch gekennzeichnet, daß der kurze Armteil (80) so angeordnet ist, daß nach Einstellung sein freies Ende bei der Streichbewegung im wesentlichen dem gleichen Bogen folgt, wie das freie Ende des langen Armteils (78).

5. Garnarmvorrichtung nach Anspruch 4, dadurch gekennzeichnet, daß eine Platte (100) mit dem langen Armteil (78) starr verbunden und der kurze Armteil (80) zum Einstellen auf der Platte (100) montiert und auf dieser beweglich ist.

6. Garnarmvorrichtung nach Anspruch 5, dadurch gekennzeichnet, daß die Platte (100) einen Schlitz (102) aufweist, der einem geometrischen Bogen angenähert ist, der um den Schwenkpunkt des Garnarmes (74) als mittelpunkt gezogen ist, und daß der kurze Armteil (80) entlang des Schlitzes (102) einstellbar ist.

7. Maschine zum Bilden zylindrischer Ballen aus Erntegut mit einer Ballenformkammer (50) mit einem Mund (52) für das Erntegut, welche eine Garnarmvorrichtung (72) mit einem Garnleitarm (74) aufweist, der schwenkbar an der Maschine montierbar ist, damit der Arm (74) über den Kammermund (52) eine Streichbewegung ausführen kann, und einem langen Armteil (78) mit einem anfänglichen stromaufwärts liegenden Teil und einem abschließenden stromabwärts liegenden Teil und einen kurzen Armteil (80) aufweist, der mit dem langen Armteil (78) am Ende des anfänglichen Teils verbunden ist, wobei die Armteile (78, 80) so ausgebildet sind, daß sie zwei Stränge (86, 88) Garn für den Ballen (112) durch den abschließenden Teil des langen Armteils (78) und den kurzen Armteil (80) tragen, dadurch gekennzeichnet, daß der kurze Armteil (80) von dem langen Armteil (78) am Ende des anfänglichen Teils abgezweigt, wobei die Armteile (78, 80) so ausgebildet sind, daß die beiden Stränge (86, 88) Garn durch den anfänglichen Teil und dann getrennt durch den abschließenden Teil und den kurzen Armteil (80) getragen werden.

8. Maschine nach Anspruch 7 und nach den Ansprüchen 5 oder 6 mit einem Messer (128) zum Abschneiden des Bindegarns, dadurch gekennzeichnet, daß das Messer so angeordnet ist, daß es durch die genannte Platte (100) in seine Schneidstellung bewegbar ist.

FIG. 1

FIG.2

FIG.3

FIG.5

FIG.4